# EUROPÄISCHE PATENTSCHRIFT

(11) **EP 2 749 461 B1**
(45) Veröffentlichungstag und Bekanntmachung des Hinweises auf die Patenterteilung: **02.10.2019**
(21) Anmeldenummer: 13190003.7
(22) Anmeldetag: 24.10.2013
(51) Int. Cl.: B60S 1/34

(54) **Antriebseinrichtung für eine Scheibenwischvorrichtung in einem Fahrzeug**
Drive device for a windscreen wiper device in a vehicle
Dispositif d'entraînement pour un dispositif d'essuie-glace dans un véhicule

(30) Priorität: 27.12.2012 DE 102012224366
(43) Veröffentlichungstag der Anmeldung: 02.07.2014
(73) Patentinhaber: ROBERT BOSCH GMBH, 70442 Stuttgart (DE)
(72) Erfinder: Kastinger, Guenter, 76571 Gaggenau-Sulzbach (DE); Geubel, Paul, 76534 Baden-Baden (DE); Huesges, Mario, 77815 Buehl (DE)

(56) Entgegenhaltungen:
- EP-A1- 0 798 182
- DE-A1-102005 035 088
- DE-A1-102010 062 320
- DE-T2- 69 407 885

## Beschreibung

Die Erfindung bezieht sich auf eine Antriebseinrichtung für eine Scheibenwischvorrichtung in einem Fahrzeug nach dem Oberbegriff des Anspruches 1.

### Stand der Technik

Bekannt sind Antriebseinrichtungen für Scheibenwischvorrichtungen in Kraftfahrzeugen zum Wischen der Frontscheibe oder der Heckscheibe. Derartige Antriebseinrichtungen umfassen einen elektrischen Antriebsmotor und ein Getriebe zur Umsetzung der Antriebsbewegung des Motors in eine Drehpendelbewegung einer Wischerwelle, welche Träger eines Wischarms und eines daran befestigten Wischblattes ist. Die Wischerwelle ist in einem Lagerdom des Getriebegehäuses drehbar aufgenommen und ist von einer Schutzkappe übergriffen, die ein Eindringen von Feuchtigkeit über die Stirnseite des Lagerdoms verhindern soll. Die Schutzkappe ist entweder drehfest mit der Wischerwelle oder fest mit dem Getriebegehäuse

Dokument DE 10 2010 062320 A1 offenbart eine Antriebseinrichtung für eine Scheibenwischvorrichtung in einem Fahrzeug, mit einer in einem gehäuseseitigen Lagerdom drehbar aufgenommenen Wischerwelle, wobei im Bereich der Stirnseite des Lagerdoms ein Dichtring angeordnet ist, mit einem den Dichtring am Lagerdom sichernden Befestigungsring, der am Lagerdom befestigt ist, wobei der Befestigungsring auf die Stirnseite des Lagerdoms aufgesetzt und formschlüssig mit dem Lagerdom verbunden ist.

### Offenbarung der Erfindung

Der Erfindung liegt die Aufgabe zu Grunde, mit einfachen konstruktiven Maßnahmen eine Antriebseinrichtung für eine Scheibenwischvorrichtung in einem Fahrzeug in der Weise auszuführen, dass ein Eindringen von Feuchtigkeit in einen die Wischerwelle aufnehmenden Lagerdom verhindert wird.

Diese Aufgabe wird erfindungsgemäß mit den Merkmalen des Anspruches 1 gelöst. Die Unteransprüche geben zweckmäßige Weiterbildungen an.

Die erfindungsgemäße Antriebseinrichtung wird für Scheibenwischvorrichtungen in Kraftfahrzeugen eingesetzt, beispielsweise zum Wischen der Frontscheibe oder der Heckscheibe. Die Antriebseinrichtung umfasst in einem Gehäuse eine Wischerwelle, über die ein Wischarm der Scheibenwischvorrichtung in eine Drehpendelbewegung versetzt werden kann. Der Wischarm ist beispielsweise auf der Wischerwelle aufgesetzt. Die Wischerwelle ist in einem Lagerdom im Gehäuse drehbar aufgenommen und wird von einem elektrischen Antriebsmotor angetrieben, welcher ebenfalls Bestandteil der Antriebseinrichtung ist. Der elektrische Antriebsmotor ist über ein Getriebe bzw. ein Wischergestänge mit der Wischerwelle verbunden und treibt diese an. Der Lagerdom ist insbesondere als Kunststoffbauteil ausgeführt.

Zum Schutz gegen eintretende Feuchtigkeit ist im Bereich der Stirnseite des Lagerdoms ein Dichtring angeordnet, der mithilfe eines Befestigungsrings am Lagerdom gesichert ist, wobei der Befestigungsring am Lagerdom befestigt ist. Der Dichtring liegt an der Mantelfläche der im Lagerdom aufgesetzten Wischerwelle an und verhindert den Eintritt von Feuchtigkeit in den Lagerdom. Der Befestigungsring deckt vorteilhafterweise den Dichtring stirnseitig ab, so dass dieser nach außen geschützt ist. Vorteilhaft ist des Weiteren, dass der Befestigungsring lediglich an der Stirnseite des Lagerdoms positioniert werden muss, wobei auch die Fixierung des Befestigungsrings bevorzugt über die Stirnseite des Lagerdoms erfolgt. Hierdurch ist eine klein bauende, Platz sparende Ausführung gegeben.

Der Dichtring ist zweckmäßigerweise in das Innere des Lagerdoms einführbar, und zwar über die freie Stirnseite des Lagerdoms, wobei der Dichtring vorteilhafterweise an einem innen liegenden Absatz an der Innenwand im Lagerdom aufliegt und in Achsrichtung abgestützt wird. Der auf die Stirnseite aufgesetzte Befestigungsring sichert den Dichtring gegen ein Lösen aus dem stirnseitigen Sitz im Lagerdom.

Ggf. ist auf den Lagerdom eine Schutzkappe aufgesetzt. Die Schutzkappe ist vorteilhafterweise ebenso wie der Lagerdom hohlzylindrisch ausgebildet und umgreift den Lagerdom. Der Befestigungsring ist auf die Stirnseite der Schutzkappe aufgesetzt, so dass der Befestigungsring mittelbar an der Stirnseite des Lagerdoms und unmittelbar an der Stirnseite der Schutzkappe angeordnet ist, die sich ihrerseits an der Stirnseite des Lagerdoms abstützt. Die Schutzkappe ist entweder als eigenständiges Bauteil ausgeführt, welches auf den Lagerdom aufgestülpt wird, oder, gemäß einer weiteren zweckmäßigen Ausführung, als ein Kunststoff-Spritzgussbauteil ausgebildet, das unmittelbar am Lagerdom angespritzt ist. Indem der Dichtring und der Befestigungsring lediglich an der Stirnseite befestigt werden müssen, entfällt die Notwendigkeit, den Dichtring in das Innere der Schutzkappe einführen zu müssen.

Die Sicherung des Befestigungsrings an der Stirnseite des Lagerdoms erfolgt in an sich bekannter Weise auf mechanische, formschlüssige und/oder stoffschlüssige Weise. Erfindungsgemäß sind Zapfen an der Stirnseite des Lagerdoms angeformt, welche sich in Achsrichtung erstrecken und auf die der Befestigungsring aufgesetzt wird, der entsprechende Ausnehmungen zur Aufnahme der Zapfen aufweist. Die Zapfen können, nachdem der Befestigungsring auf diese aufgesetzt worden ist, zum Herstellen einer stoffschlüssigen Verbindung verformt werden, beispielsweise durch Warmverprägen. Dies lässt sich bevorzugt bei einem Kunststoff-Befestigungsring anwenden, der die Zapfen aufnehmende Ausnehmungen aufweist.

Alternativ oder zusätzlich kann der Befestigungsring auch mit der Stirnseite des Lagerdoms verklebt sein. Des Weiteren kommt auch eine Verbindung über Ultraschallschweißen in Betracht oder ein mechanisches Verbindung wie zum Beispiel Anklipsen oder dergleichen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung in einem Kraftfahrzeug,
- Fig. 2: eine schematische Darstellung einer Antriebseinrichtung für eine Scheibenwischvorrichtung, mit einem elektrischen Antriebsmotor und einem Getriebe zur Umsetzung der Motorbewegung in eine Drehpendelbewegung einer Abtriebswelle,
- Fig. 3: in perspektivischer Ansicht ein gehäuseseitiger Lagerdom zur Aufnahme einer Wischerwelle, mit einem stirnseitig aufsetzbaren Dichtring und einem Befestigungsring,
- Fig. 4: der Lagerdom mit eingesetzter Wischerwelle.

In den Figuren sind gleiche Bauteile mit gleichen Bezugszeichen versehen.

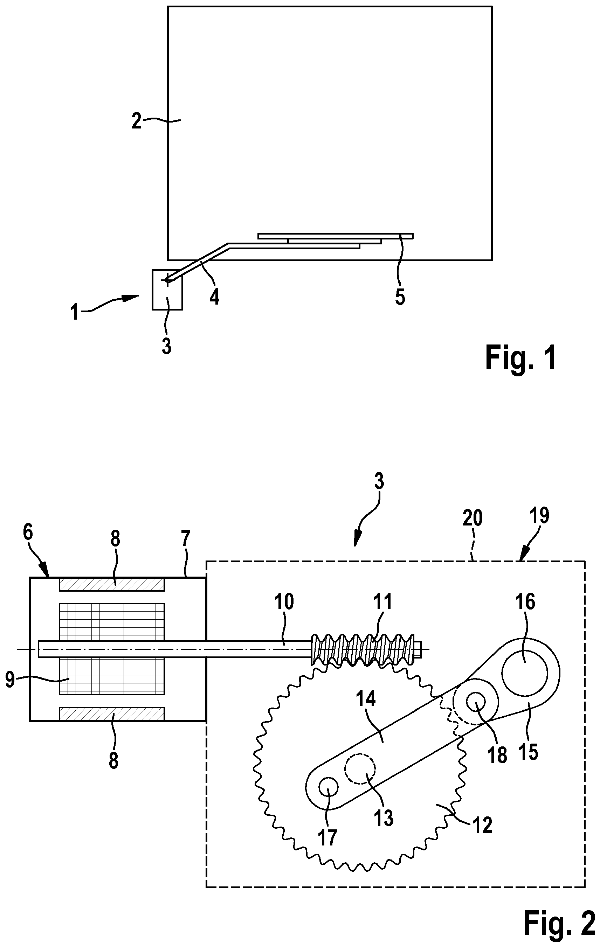

In Fig. 1 ist eine Scheibenwischvorrichtung 1 für ein Kraftfahrzeug dargestellt, über die eine Fahrzeugscheibe 2, bei der es sich um eine Heckscheibe handelt, gereinigt werden kann. Grundsätzlich kommt auch eine Anwendung der Scheibenwischvorrichtung auf Frontscheiben in Betracht. Die Scheibenwischvorrichtung 1 umfasst eine Antriebseinrichtung 3, die einen Wischarm 4 in eine pendelnde Drehbewegung versetzt, wobei der Wischarm 4 ein Wischblatt 5 trägt, das auf der Fahrzeugscheibe 2 aufliegt. Die Antriebseinrichtung 3 umfasst einen elektrischen Antriebsmotor sowie ein Getriebe mit einer Wischerwelle, mit der der Wischarm 4 gekoppelt ist. Der Motor versetzt über das Getriebe die Wischerwelle in die Drehpendelbewegung, welche auch von dem Wischarm 4 einschließlich Wischblatt 5 ausgeführt wird.

Wie Fig. 2 zu entnehmen, umfasst die Antriebsvorrichtung 3 den elektrischen Antriebsmotor 6 und das Getriebe 19 in einem Getriebegehäuse 20. Der elektrische Antriebsmotor 6 weist in einem Statorgehäuse 7 Permanentmagnete 8 auf, welche einen Anker umschließen, der aus einer bestrombaren Spule 9 und einer Anker- bzw. Rotorwelle 10 besteht, auf die die Spule 9 aufgesetzt ist. Die Rotorwelle 10 trägt auf ihrem außerhalb des Statorgehäuses 7 gelegenen Wellenabschnitt eine Schnecke 11, die mit einem Schneckenrad 12 kämmt, welches im Getriebegehäuse 20 um eine Welle 13 drehbar gelagert ist. Die Drehbewegung des Schneckenrads 12 wird über eine exzentrisch gelagerte Schubstange 14 und eine Kurbel 15 in die gewünschte Drehpendelbewegung der Abtriebs- bzw. Wischerwelle 16 umgesetzt. Die Schubstange 14 ist mit radialem Abstand zur Welle 13 über ein erstes Drehgelenk 17 drehbar mit dem Schneckenrad 12 gekoppelt und im Bereich der gegenüberliegenden Stirnseite über ein zweites Drehgelenk 18 drehbar mit der Kurbel 15 verbunden, die ihrerseits fest auf der Wischerwelle 16 aufsitzt. Die Schnecke 11, das Schneckenrad 12, die Schubstange 14, die Kurbel 15 und die Wischerwelle 16 bilden Bauteile des Getriebes 19 innerhalb des Getriebegehäuses 20. Auf der Wischerwelle 16 sitzt der Wischarm auf, welcher Träger des auf der Fahrzeugscheibe aufliegenden Wischblattes ist.

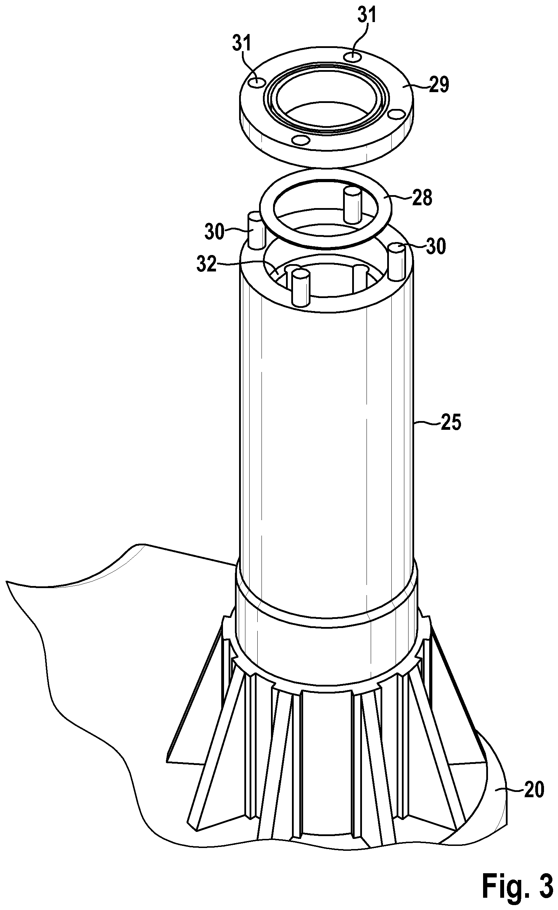

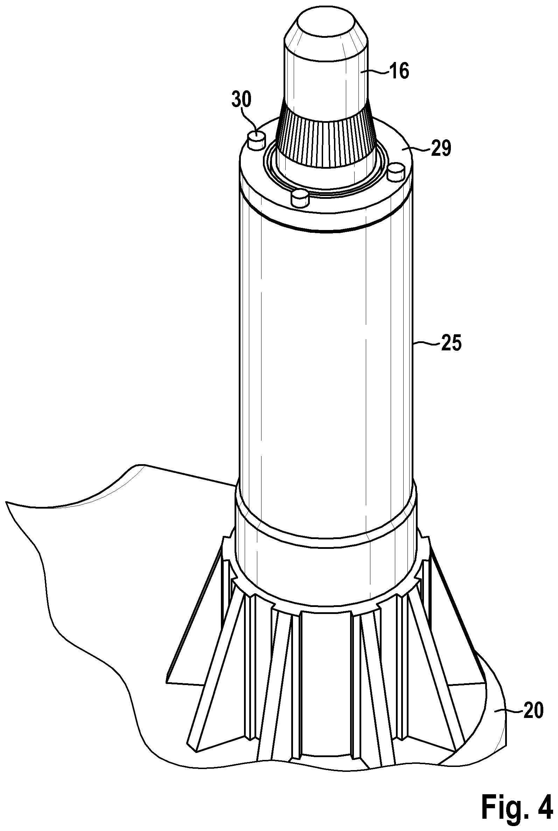

In den Fig. 3 und 4 ist ein Lagerdom 25 im Detail dargestellt, der Teil des Getriebegehäuses 20 ist und in dem die Wischerwelle 16 drehbar gelagert ist. Das Getriebegehäuse 20 einschließlich Lagerdom 25 ist als Kunststoffbauteil ausgeführt, wobei der Lagerdom 25 einteilig mit einer Kunststoff-Schutzkappe ausgebildet ist bzw. eine derartige Kunststoff-Schutzkappe bildet. Der Lagerdom 25 ist hohlzylindrisch ausgebildet. An der freien Stirnseite des Lagerdoms 25 sind sich axial erstreckende Zapfen 30 angespritzt, die zur Befestigung eines Kunststoff-Befestigungsrings 29 dienen, welcher einen Dichtring 28 sichert, der ein Eindringen von Feuchtigkeit in den Lagerdom verhindern soll. Im montierten Zustand liegt der Dichtring 28 unmittelbar an der Mantelfläche der Wischerwelle 16 an.

Der Dichtring 28 wird über die freie Stirnseite des Lagerdoms 25 in das Innere des Lagerdoms eingeführt und stützt sich an einem innen liegenden Absatz 32 im Lagerdom 25 ab. Im montierten Zustand liegt der Befestigungsring 29 an der Stirnseite des Lagerdoms 25 und sichert dadurch ein versehentliches Lösen des Dichtringes 28 aus dem Inneren des Lagerdoms 25.

In den Befestigungsring 29 sind über den Umfang verteilt mehrere Ausnehmungen 31 eingebracht, die mit den Zapfen 30 an der Stirnseite des Lagerdoms 25 korrespondieren. Im montierten Zustand ragen die Zapfen 30 durch die Ausnehmungen 31 hindurch und können beispielsweise mittels Warmverprägen so verformt werden, dass eine form- bzw. stoffschlüssige Verbindung zwischen dem Befestigungsring 29 und den Zapfen 30 am Lagerdom 25 gegeben ist. Auf diese Weise ist der Befestigungsring 29 unverlierbar am Lagerdom 25 gehalten.

Die Befestigung des Befestigungsrings 29 am Lagerdom 25 kann zusätzlich oder alternativ auch über ein Ultraschallverschweißen, ggf. über ein Verkleben erfolgen.

## Patentansprüche

1. Antriebseinrichtung für eine Scheibenwischvorrichtung (1) in einem Fahrzeug, mit einer in einem gehäuseseitigen Lagerdom (25) drehbar aufgenommenen Wischerwelle (16), wobei im Bereich der Stirnseite des Lagerdoms (25) ein Dichtring (28) angeordnet ist, mit einem den Dichtring (28) am Lagerdom (25) sichernden Befestigungsring (29), der am Lagerdom (25) befestigt ist, wobei der Befestigungsring (29) auf die Stirnseite des Lagerdoms (25) aufgesetzt und mechanisch, formschlüssig und/oder stoffschlüssig mit dem Lagerdom (25) verbunden ist, **dadurch gekennzeichnet, dass** an der freien Stirnseite des Lagerdoms (25) sich axial erstreckende Zapfen (30) angespritzt sind, die zur Befestigung eines Befestigungsrings (29) aus Kunststoff dienen.

2. Antriebseinrichtung nach Anspruch 1, **dadurch gekennzeichnet, dass** der Lagerdom (25) als Kunststoffbauteil ausgeführt ist.

3. Antriebseinrichtung nach einem der Ansprüche 1 oder 2, **dadurch gekennzeichnet, dass** der Befestigungsring (29) durch Warmverprägen mit dem Lagerdom (25) verbunden ist.

4. Antriebseinrichtung nach einem der Ansprüche 1 bis 3, **dadurch gekennzeichnet, dass** der Befestigungsring (29) durch Kleben mit dem Lagerdom (25) verbunden ist.

5. Antriebseinrichtung nach einem der Ansprüche 1 bis 4, **dadurch gekennzeichnet, dass** der Befestigungsring (29) durch Ultraschallschweißen mit dem Lagerdom (25) verbunden ist.

6. Antriebseinrichtung nach einem der Ansprüche 1 bis 5, **dadurch gekennzeichnet, dass** der Dichtring (28) in den Lagerdom (25) eingesetzt ist und an einem innen liegenden Absatz (32) im Lagerdom (25) aufliegt.

7. Antriebseinrichtung nach einem der Ansprüche 1 bis 6, **dadurch gekennzeichnet, dass** der Befestigungsring (29) den Dichtring (28) stirnseitig abdeckt.

8. Scheibenwischvorrichtung (1) mit einer Antriebseinrichtung nach einem der Ansprüche 1 bis 7.

## Claims

1. Drive device for a windscreen wiper device (1) in a vehicle, having a wiper shaft (16) which is accommodated rotatably in a housing-side bearing dome (25), wherein a sealing ring (28) is arranged in the region of the end side of the bearing dome (25), having a fastening ring (29) which secures the sealing ring (28) on the bearing dome (25) and is fastened to the bearing dome (25), wherein the fastening ring (29) is placed onto the end side of the bearing dome (25) and is connected to the bearing dome (25) in a mechanical, form-fitting and/or integrally bonded manner, **characterized in that** axially extending pins (30) which serve for fastening a fastening ring (29) made of plastic are injection moulded on the free end side of the bearing dome (25).

2. Drive device according to Claim 1, **characterized in that** the bearing dome (25) is designed as a plastics component.

3. Drive device according to either of Claims 1 and 2, **characterized in that** the fastening ring (29) is connected to the bearing dome (25) by hot stamping.

4. Drive device according to one of Claims 1 to 3, **characterized in that** the fastening ring (29) is connected to the bearing dome (25) by adhesive bonding.

5. Drive device according to one of Claims 1 to 4, **characterized in that** the fastening ring (29) is connected to the bearing dome (25) by ultrasonic welding.

6. Drive device according to one of Claims 1 to 5, **characterized in that** the sealing ring (28) is inserted into the bearing dome (25) and rests on an inner step (32) in the bearing dome (25).

7. Drive device according to one of Claims 1 to 6, **characterized in that** the fastening ring (29) covers the sealing ring (28) on the end side.

8. Windscreen wiper device (1) with a drive device according to one of Claims 1 to 7.

## Revendications

1. Mécanisme d'entraînement destiné à un dispositif d'essuie-glace (1) d'un véhicule, le mécanisme d'entraînement comprenant un arbre d'essuie-glace (16) reçu de manière rotative dans un dôme de palier (25) côté boîtier, une bague d'étanchéité (28) étant disposée dans la région du côté frontal du dôme de palier (25), une bague de fixation (29) qui assure la bague d'étanchéité (28) au niveau du dôme de palier (25) et qui est fixée au dôme de palier (25), la bague de fixation (29) étant placée sur le côté frontal du dôme de palier (25) et étant reliée au dôme de palier (25) mécaniquement, par complémentarité de formes et/ou par une liaison de matière, **caractérisé en ce que** des broches (30) s'étendant axialement sont moulées par injection sur le côté frontal libre du dôme de palier (25), lesquelles servent à la fixation d'une bague de fixation (29) en matière synthétique.

2. Mécanisme d'entraînement selon la revendication 1, **caractérisé en ce que** le dôme de palier (25) est réalisé sous la forme d'une composant en matière synthétique.

3. Mécanisme d'entraînement selon l'une des revendications 1 et 2, **caractérisé en ce que** la bague de fixation (29) est reliée par estampage à chaud au dôme de palier (25).

4. Mécanisme d'entraînement selon l'une des revendications 1 à 3, **caractérisé en ce que** la bague de fixation (29) est reliée par collage au dôme de palier (25).

5. Mécanisme d'entraînement selon l'une des revendications 1 à 4, **caractérisé en ce que** la bague de fixation (29) est reliée par soudage par ultrasons au dôme de palier (25).

6. Mécanisme d'entraînement selon l'une des revendications 1 à 5, **caractérisé en ce que** la bague d'étanchéité (28) est insérée dans le dôme de palier (25) et vient en appui sur un épaulement intérieur (32) situé dans le dôme de palier (25).

7. Mécanisme d'entraînement selon l'une des revendications 1 à 6, **caractérisé en ce que** la bague de fixation (29) recouvre la bague d'étanchéité (28) du côté frontal.

8. Dispositif d'essuie-glace (1) pourvu d'un mécanisme d'entraînement selon l'une des revendications 1 à 7.
